# EUROPÄISCHE PATENTSCHRIFT

(11) **EP 1 071 595 B1**
(45) Veröffentlichungstag und Bekanntmachung des Hinweises auf die Patenterteilung: **25.09.2002**
(21) Anmeldenummer: 99917872.6
(22) Anmeldetag: 26.03.1999
(51) Int. Cl.: B60T 8/00

(54) **VERFAHREN UND VORRICHTUNG ZUR REGELUNG DES ANTRIEBSSCHLUPFES EINES FAHRZEUGS AUF HOCHREIBWERT BERGAUF ODER MIT HOHER BELADUNG**
METHOD AND DEVICE FOR SETTING THE DRIVE SLIP OF A VEHICLE TO A HIGH FRICTION FACTOR WHEN THE VEHICLE IS GOING UPHILL OR CARRYING A HEAVY LOAD
PROCEDE ET DISPOSITIF POUR REGULER LE PATINAGE D'UN VEHICULE EN FONCTION D'UN COEFFICIENT DE FROTTEMENT ELEVE, EN MONTEE OU AVEC UN CHARGEMENT ELEVE

(30) Priorität: 24.04.1998 DE 19818222; 27.10.1998 DE 19849409
(43) Veröffentlichungstag der Anmeldung: 31.01.2001
(73) Patentinhaber: Continental Teves AG & Co. oHG, 60488 Frankfurt (DE)
(72) Erfinder: HALAT, Siegfried, D-64289 Darmstadt (DE); STÖCKMANN, Ulrich, D-64289 Darmstadt (DE); HARTMANN, Bernd-Uwe, D-63584 Gründau (DE); KERFEKHAH, Cyrus, D-64291 Darmstadt (DE); SCHUHMACHER, Christian, D-61250 Usingen (DE); NIES, Roland, D-61203 Reichelsheim (DE)
(86) Internationale Anmeldenummer: EP9902069
(87) Internationale Veröffentlichungsnummer: WO99055565

(56) Entgegenhaltungen:
- WO-A-98/22304
- DE-A- 19 548 564

## Beschreibung

Die Erfindung betrifft ein Verfahren und eine Vorrichtung zur Regelung des Antriebsschlupfs eines Fahrzeugs auf Hochreibwert gemäß den Oberbegriffen der unabhängigen Ansprüche.

Antriebsschlupf bedeutet grundsätzlich, daß die Räder schneller drehen als es der Fahrzeuggeschwindigkeit des Fahrzeugs entspricht. Dies tritt häufig beim Anfahren auf, insbesondere während des Einkuppelns oder wenn mit niedrigem Gang kräftig Gas gegeben wird. Das Antriebsmoment ist dann größer als das Moment, das aufgrund der Reibverhältnisse zwischen Rad und Fahrbahn zwischen diesen beiden übertragen werden kann.

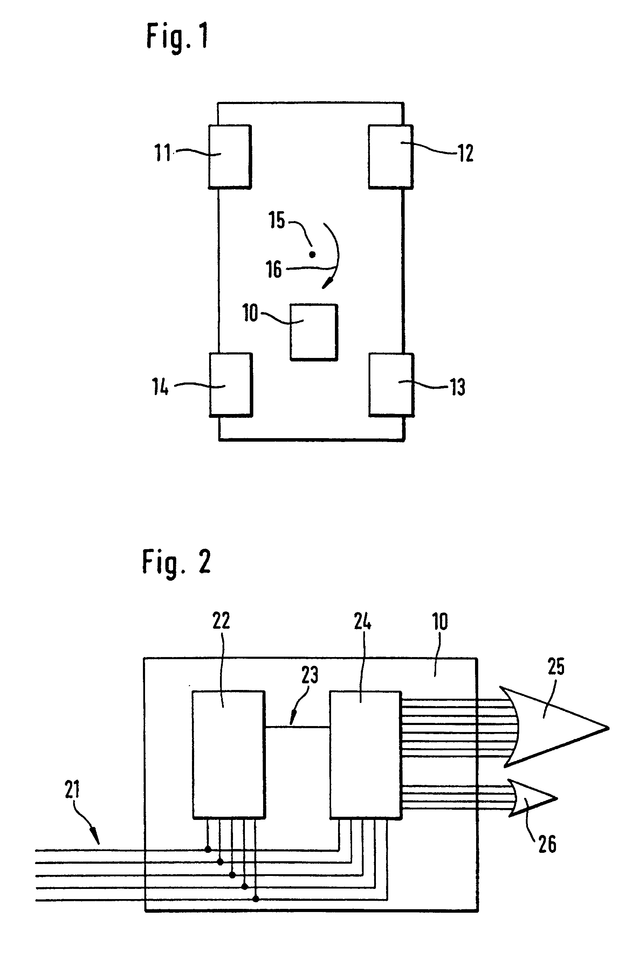

Fig. 1 zeigt schematisch ein Fahrzeug von oben, für das Frontantrieb angenommen wird. 11 sei das Rad vorne links, 12 das Rad vorne rechts, 13 das Rad hinten rechts und 14 das Rad hinten links. Die Räder 11 und 12 können demnach in den Antriebsschlupf geraten.

Grundsätzlich soll der Antriebsschlupf begrenzt werden. Zum einen führt übermäßiger Antriebsschlupf zu Traktionsverlust, da bei stark durchdrehenden Rädern nur eine vergleichsweise geringe Kraft zwischen Rad und Fahrbahn übertragen werden kann. Zum anderen führt er zu starkem Reifenabrieb sowie zu Fahrsituationen, die hinsichtlich der Fahrstabilität nicht optimal definiert sind.

Herkömmliche Antriebsschlupfregelsysteme, siehe z.B. DE-A-195 48 564, versuchen deshalb, den Antriebsschlupf auf einen optimalen Wert zu begrenzen.

Dies kann durch Reduzierung der Antriebsleistung und/oder durch Bremsen der angetriebenen Räder geschehen. Dies kann dann zu nachteiligen Auswirkungen führen, wenn beim Anfahren ein überaus hoher Momentenbedarf erforderlich ist, beispielsweise beim Anfahren am Berg oder beim Anfahren mit hoher Zuladung (Gepäck, Insassen, Dachlast, Anhänger). Hier tritt aufgrund der höheren zu überwindenden Kräfte bzw. Momente noch wahrscheinlicher Antriebsschlupf auf. Übliche Antriebsschlupfregelsysteme führen hierbei oft zu einem Abwürgen des Motors, weil entweder durch die Motormomentreduzierung oder durch die Abbremsung im eingekuppelten Zustand der Motor bei hoher Last unter die mindestens notwendige Drehzahl abgebremst wird. Ein Anfahren ist dann nur bei ausgeschaltetem Antriebsschlupfregelsystem möglich.

Aufgabe der Erfindung ist es, ein Verfahren und eine Vorrichtung zur Antriebsschlupfregelung auf hohem Reibwert anzugeben, die ein Anfahren auch bei hoher Fahrzeuglast ermöglichen.
Diese Aufgabe wird mit den Merkmalen der unabhängigen Ansprüche gelöst. Abhängige Ansprüche sind auf bevorzugte Ausführungsformen der Erfindung gerichtet.

Gemäß einem Aspekt der Erfindung wird die Situation mit vergleichsweise hoher Anfahrlast erkannt. Insbesondere können hierzu verschiedene Bedingungen abgefragt bzw. überprüft werden. Gemäß einem weiteren Aspekt der Erfindung wird auf die Erkennung hin eine Gegenmaßnahme dahingehend getroffen, daß momentan höhere Antriebsschlupfwerte zugelassen werden, als dies herkömmlichen Antriebsschlupfregelungszielen entspricht. Dies kann beispielsweise durch Vermindern eines regelungstechnischen Bremseingriffs und/oder durch Verminderungen der Soll-Motormomentabsenkung bzw. durch Soll-Motormomenterhöhung geschehen.

Die erfindungsgemäße Antriebsschlupfregelung kann ergänzend zu herkömmlichen Antriebsschlupfregelungen vorgesehen sein. Das herkömmliche System arbeitet im wesentlichen wie gewohnt. Lediglich dann, wenn die eingangs beschriebene Anfahrsituation erkannt wird, werden die herkömmlich erzeugten Sollwerte bzw. Ansteuersignale für Bremse und/oder Motor erfindungsgemäß modifiziert bzw. ersetzt.

Nachfolgend werden bezugnehmend auf die Zeichnungen einzelne Ausführungsformen der Erfindung beschrieben, es zeigen:
- Fig. 1: schematisch ein Fahrzeug in Draufsicht,
- Fig. 2: schematisch als Blockdiagramm die für diese Erfindung wesentlichen Komponenten der Antriebsschlupfregelung,
- Fig. 3: die Erkennungseinrichtung aus Fig. 2, und
- Fig. 4: die Fahrzeugansteuerung aus Fig. 2.

Fig. 2 zeigt eine Antriebsschlupfregelung mit einer Erkennungseinrichtung 22 und einer Fahrzeugansteuerung 24. Die Antriebsschlupfregelung 10 empfängt grundsätzlich Eingangssignale 21 und gibt Ansteuersignale 25 für die Bremsanlage und/oder Ansteuersignale 26 für den Fahrzeugmotor aus. Die Eingangssignale 21 können verschiedenster Natur sein und den verschiedensten Quellen entnommen werden. Signalquellen können Sensoren sein, andere Komponenten der Fahrzeugregelung, Speicher o.ä. Die Signale 21 können den Quellen direkt entnommen werden, sie können auch einem Fahrzeugdatenbus entnommen werden, auf den sie vorher eingespielt wurden. Insbesondere können die Signale 21 die Radsignale der Räder des Fahrzeugs aufweisen, die Fahrzeugreferenzgeschwindigkeit, Bremsdrucksignale u.ä. Je nach Bedarf werden diese Eingangssignale 21 in der Erkennungseinrichtung 22 und in der Ansteuervorrichtung 24 ausgewertet. Wenn die Erkennungseinrichtung 22 die Situation mit hoher Anfahrlast erkennt, gibt sie ein Erkennungssignal 23 aus, das der Ansteuervorrichtung 24 qualitative, ggf. auch quantiative Informationen übermittelt, so daß die Ansteuervorrichtung 24 ihrerseits geeignete Ansteuersignale 25 für die Fahrzeugbremse und 26 für den Motor erzeugen kann.

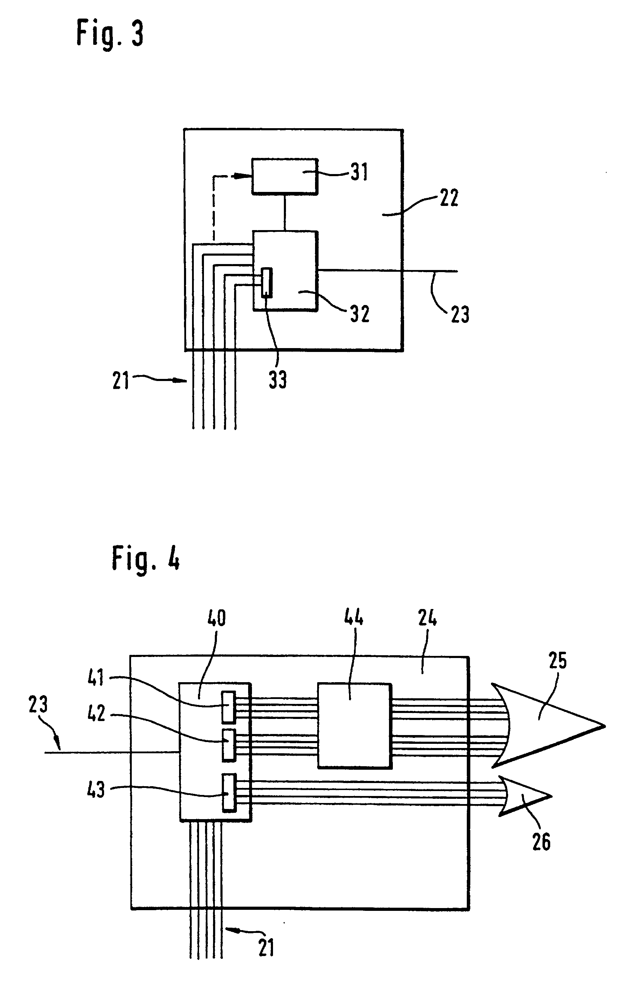

Fig. 3 zeigt die Erkennungseinrichtung 22 ausführlicher. Die Erkennungseinrichtung 22 weist eine Überprüfungseinrichtung 32 auf. Von einer Sollwertvorgabe 31 empfängt die Überprüfungseinrichtung 32 verschiedene Sollwerte, die ihrerseits von bestimmten Eingangssignalen abhängen können. In der Überprüfungseinrichtung 32 werden Eingangssignale mit Sollwerten verglichen. Darüber hinaus können Eingangssignale in einem Vergleicher 33 direkt miteinander verglichen werden.
Im einzelnen können in der Überprüfungseinrichtung 32 eine oder mehrere der folgenden Überprüfungen bzw. Abfragen vorgenommen werden: Es wird überprüft, ob
- das Ist-Motormoment über einem ersten Schwellenwert liegt,
- das Laufverhalten der Räder, insbesondere der angetriebenen Räder, innerhalb bestimmter Grenzen synchron ist,
- der Antriebsschlupf zumindest eines Rades oder die Summe der Antriebsschlupfe der angetriebenen Räder unter einem zweiten Schwellenwert liegt,
- die Beschleunigung eines Antriebsschlupfes oder eines angetriebenen Rades oder deren achsweise Summe oder die Beschleunigung des Motors negativer als ein negativer dritter Schwellenwert ist.

Darüber hinaus kann überprüft werden, ob die Fahrzeugreferenzgeschwindigkeit unter einem vierten Schwellenwert liegt.

Führen die vorgenommenen Überprüfungen alle zu dem Ergebnis "Ja", wird auf die Situation mit hoher Anfahrlast erkannt und ein entsprechendes Signal 23 ausgegeben.

Das Ist-Motormoment wird überprüft, um ein erstes Indiz für die hohe Anfahrlast zu gewinnen. Der erste Schwellenwert wird dabei vorzugsweise höher als ein für herkömmliche Anfahrsituationen benötigtes Moment gewählt.

Das synchrone Laufverhalten wird überprüft, um Situationen mit geteiltem Reibwert auszuschließen (in denen das Rad auf niedrigem Reibwert starken Antriebsschlupf aufweist und das Rad auf hohem Reibwert schwächeren oder keinen Antriebsschlupf). Hierzu werden die Radbeschleunigungen und/oder die Radschlupfe und/oder die Radgeschwindigkeiten der angetriebenen Räder verglichen, wobei auf Synchronlauf erkannt wird, wenn eine Abweichung kleiner als ein geeigneter Schwellenwert ist.

Die Höhe des Antriebsschlupfs wird einzeln oder als Summe beider angetriebenen Räder daraufhin überprüft, ob sie unter einem zweiten Schwellenwert liegt. Wenn dies der Fall ist, verspricht der vorgesehene Eingriff Erfolg dahingehend, daß durch eine Erhöhung des Antriebsschlupfs ein Abwürgen des Motors verhindert wird. Wenn andererseits der Antriebsschlupf sowieso schon hoch ist, verspricht die ins Auge gefaßte Maßnahme keinen Erfolg und kann daher unterbleiben. Sinngemäß die gleichen Überlegungen gelten hinsichtlich der Überprüfung der Beschleunigung des Antriebsschlupfs oder eines angetriebenen Rades bzw. der achsweisen Summen oder der Beschleunigung des Motors. Wenn die Beschleunigungen negativer als ein negativer dritter Schwellenwert sind, deutet dies darauf hin, daß eine Tendenz hin zum Abwürgen des Motors vorliegt, so daß der erfindungsgemäße Eingriff Erfolg verspricht.

Um Fehlerkennungen weiter auszuschließen, wird die Fahrzeugreferenzgeschwindigkeit auf das Unterschreiten eines vierten Schwellenwertes hin überprüft. Der vierte Schwellenwert kann so gelegt werden, daß "Anfahrgeschwindigkeiten" erkannt werden, beispielsweise solche unter 10 km/h.

Um eine Unterscheidung von Anfahrsituationen auf niedrigem Reibwert (für beide Räder) zu gewinnen, kann der Antriebsschlupf darüber hinaus daraufhin überprüft werden, ob er innerhalb eines Zeitfensters nach Regelungseintritt innerhalb eines bestimmten Wertebands liegt. Wenn insgesamt niedriger Reibwert vorliegt (beispielsweise wegen verschneiter Fahrbahn), wir der Antriebsschlupf vergleichsweise hoch liegen bzw. werden. Auf niedrigem Reibwert können andere Antriebsschlupfregelungsstrategien sinnvoller sein.

Fig. **4** zeigt eine Ausführungsform der Ansteuerungseinrichtung **24.** Sie weist eine Sollwertvorgabe 40 und eine Ansteuersignalerzeugung 44 auf. Die Sollwertevorgabe 40 weist eine Sollwertvorgabe 41 für Bremsdrücke, eine Sollwertvorgabe 42 für Bremsdruckgradienten und eine Sollwertvorgabe 43 für Motorparameter auf. Die Ansteuersignalerzeugung 44 erzeugt Ansteuersignale 25 für die Ventile der Radbremsen. Die Signale 25 werden dem Ventilblock zugeführt. Die Sollwerte 26 für den Motor werden ebenfalls geeigneten Stellgliedern oder anderen Regelungskomponenten zugeführt. Die Sollwertvorgabe 40 empfängt insbesondere das Erkennungssignal 23 und erzeugt daraufhin die notwendigen Sollwerte, wobei auch auf die jeweils notwendigen übrigen Eingangssignale 21 Bezug genommen wird.

Eine mögliche Maßnahme ist es, einen regelungstechnischen Bremseingriff (aus der Antriebsschlupfregelung) zu unterdrücken, abzubrechen oder zu vermindern. Bremsdruck-Sollwerte können herabgesetzt werden und/oder mit einem negativen Gradienten verringert werden. Der Fahrerbremseingriff bleibt hiervon unberührt.

Darüber hinaus kann über die Sollwertvorgabe für Motorparameter bzw. über eine Motorschnittstelle 43 der Motor und insbesondere dessen Drehmoment beeinflußt werden. Erfindungsgemäß kann auf die Erkennung hin das Motordrehmoment erhöht werden, beispielsweise indem das Soll-Motordrehmoment erhöht wird. Hier können verschiedene Strategien verfolgt werden. Es können auch Ausschlußkriterien für die Beeinflussung des Motordrehmoments überprüft werden. Die Beeinflussung des Motordrehmoments kann unterbleiben, wenn die Drehzahl größer als ein bestimmter Schwellenwert ist (was auf einen schnell drehenden Motor hindeutet), oder sie kann unterbleiben, wenn der Drehzahlgradient positiver als ein betragsmäßig kleiner negativer Schwellenwert ist.

Wenn das Motordrehmoment beeinflußt wird, wird es angehoben. Es kann eine Anhebung um einen festen Betrag erfolgen. Das Moment kann um einen ersten Betrag erhöht werden, wenn die Motordrehzahl einen fünften Schwellenwert unterschreitet, und es kann um einen zweiten, höheren Betrag erhöht werden, wenn der Motordrehzahlgradient einen negativen sechsten Schwellenwert unterschreitet. Es kann auch zu einer Motormomentenregelung kommen, wobei das Moment nach Maßgabe der Motordrehzahl P-geregelt oder PD-geregelt wird.

## Patentansprüche

1. Verfahren zur Regelung des Antriebsschlupfes eines Fahrzeugs, mit den Schritten
Erkennen einer Anfahrsituation auf hohem Reibwert bergauf und/oder mit hoher Fahrzeugbeladung, und
wenn die Anfahrsituation erkannt und Antriebsschlupf vorhanden ist, Vermindern eines regelungstechnischen Bremseingriffes und/oder Erhöhen des Soll-Motormoments.

2. Verfahren nach Anspruch 1, **dadurch gekennzeichnet, daß** zur Erkennung einer oder mehrere der folgenden Schritte ausgeführt werden:
Überprüfen, ob das Ist-Motormoment über einem ersten Schwellenwert liegt,
Überprüfen, ob das Laufverhalten der Räder innerhalb bestimmter Grenzen synchron ist,
Überprüfen, ob der Antriebsschlupf zumindest eines Rades oder die Summe der Antriebsschlupfe der angetriebenen Räder unter einem zweiten Schwellenwert liegt,
Überprüfen, ob die Beschleunigung eines Antriebsschlupfes und/oder eines angetriebenen Rades oder deren achsweise Summe und/oder die Beschleunigung des Motors negativer als ein negativer dritter Schwellenwert ist.

3. Verfahren nach Anspruch 2, **dadurch gekennzeichnet, daß** zur Erkennung überprüft wird, ob die Fahrzeuggeschwindigkeit unter einem vierten Schwellenwert liegt.

4. Verfahren nach Anspruch 2 oder 3, **dadurch gekennzeichnet, daß** bei der Überprüfung des Ist-Motormoments der erste Schwellenwert höher als ein Momentenwert gesetzt wird, der beim Anfahren in der Ebene benötigt wird.

5. Verfahren nach einem der Ansprüche 2 bis 4, **dadurch gekennzeichnet, daß** bei der Überprüfung des Laufverhaltens der Räder auf Synchronlauf die Radbeschleunigungen und/oder die Radschlupfe und/oder die Radgeschwindigkeiten der angetriebenen Räder verglichen werden, wobei auf Synchronlauf erkannt wird, wenn eine Abweichung kleiner als ein jeweiliger Schwellenwert ist.

6. Verfahren nach einem der Ansprüche 2 bis 5, **dadurch gekennzeichnet, daß** bei der Überprüfung des Antriebsschlupfes der Schlupf zumindest eines Rades der angetriebenen Achse daraufhin überprüft wird, ob er innerhalb eines Zeitfensters nach Regelungseintritt innerhalb eines bestimmten Wertebandes liegt.

7. Verfahren nach Anspruch 6, **dadurch gekennzeichnet, daß** das Zeitfenster 300 bis 700 ms, vorzugsweise 400 bis 600 ms dauert.

8. Verfahren nach einem der vorherigen Ansprüche, **dadurch gekennzeichnet, daß** auf die Erkennung hin der regelungstechnische Bremseingriff abgebrochen bzw. verhindert wird.

9. Verfahren nach einem der vorherigen Ansprüche, **dadurch gekennzeichnet, daß** das Soll-Motormoment nach Maßgabe der Motordrehzahl und/oder nach Maßgabe des Motordrehzahlgradienten erhöht wird.

10. Verfahren nach Anspruch 9, **dadurch gekennzeichnet, daß** das Soll-Motormoment um einen ersten Betrag erhöht wird, wenn die Motordrehzahl einen fünften Schwellenwert unterschreitet, und um einen zweiten, höheren Betrag erhöht wird, wenn der Motordrehzahlgradient einen negativen sechsten Schwellenwert unterschreitet.

11. Verfahren nach Anspruch 9 oder 10, **dadurch gekennzeichnet, daß** das Motormoment nach Maßgabe der Motordrehzahl PD-, P- oder D-geregelt, vorzugsweise PD-geregelt wird.

12. Verfahren nach einem der vorherigen Ansprüche, **dadurch gekennzeichnet, daß** es ergänzend zu einem Antriebsschlupfregelverfahren ausgeführt wird, bei dem Antriebsschlupf mit einer ggf. fahrzeuggeschwindigkeitsabhängigen Schwelle verglichen und durch Motormomentenabsenkung und/oder Bremsdruckerhöhung verändert wird.

13. Vorrichtung zur Regelung des Antriebsschlupfes eines Fahrzeugs, insbesondere zur Durchführung des Verfahrens nach einem der vorherigen Ansprüche, mit einer Erkennungseinrichtung (22) zum Erkennen einer Anfahrsituation auf hohem Reibwert bergauf und/oder mit hoher Fahrzeugbeladung, und
einer Ansteuereinrichtung (24), die dann, wenn die Anfahrsituation erkannt und Antriebsschlupf vorhanden ist, einen regelungstechnischen Bremseingriff vermindert und/oder das Soll-Motormoment erhöht.

14. Vorrichtung nach Anspruch 13, **dadurch gekennzeichnet, daß** die Erkennungseinrichtung (22) eine Überprüfungseinrichtung (32) aufweist zum Überprüfen, ob das Ist-Motormoment über einem ersten Schwellenwert liegt, und/oder ob das Laufverhalten der Räder innerhalb bestimmter Grenzen synchron ist, und/oder ob der Antriebsschlupf zumindest eines Rades oder die Summe der Antriebsschlupfe der angetriebenen Räder unter einem zweiten Schwellenwert liegt, und/oder ob die Beschleunigung eines Antriebsschlupfes oder eines angetriebenen Rades oder deren achsweise Summe oder die Beschleunigung des Motors negativer als ein negativer dritter Schwellenwert ist.

15. Vorrichtung nach Anspruch 14, **dadurch gekennzeichnet, daß** die Überprüfungseinrichtung (32) überprüft, ob die Fahrzeuggeschwindigkeit unter einem vierten Schwellenwert liegt.

16. Vorrichtung nach Anspruch 14 oder 15, **dadurch gekennzeichnet, daß** bei der Überprüfung des Ist-Motormoments eine Setzeinrichtung (31) den ersten Schwellenwert höher setzt als einen Momentenwert, der beim Anfahren in der Ebene benötigt wird.

17. Vorrichtung nach einem der Ansprüche 14 bis 16, **dadurch gekennzeichnet, daß** für die Überprüfung des Laufverhaltens der Räder auf Synchronlauf eine Vergleichseinrichtung (33) für die Radbeschleunigungen und/oder die Radschlupfe und/oder die Radgeschwindigkeiten der angetriebenen Räder vorgesehen ist, wobei auf Synchronlauf erkannt wird, wenn eine Abweichung kleiner als ein jeweils entsprechender Schwellenwert ist.

18. Vorrichtung nach einem der Ansprüche 14 bis 17, **dadurch gekennzeichnet, daß** bei der Überprüfung des Antriebsschlupfes der Schlupf zumindest eines Rades der angetriebenen Achse daraufhin überprüft wird, ob er innerhalb eines Zeitfensters nach Regelungseintritt innerhalb eines bestimmten Wertebandes liegt.

19. Vorrichtung nach einem der Ansprüche 13 bis 18, **gekennzeichnet durch** eine Motorschnittstelle (43), mit der das Soll-Motormoment nach Maßgabe der Motordrehzahl und/oder nach Maßgabe des Motordrehzahlgradienten erhöht wird.

20. Vorrichtung nach Anspruch 19, **gekennzeichnet durch** eine PD-, P- oder D-Regelung des Motormoments, vorzugsweise PD-Regelung, nach Maßgabe der Motordrehzahl.

## Claims

1. Method for controlling the traction slip of a vehicle, comprising the following steps:
identifying an uphill start situation at a high coefficient of friction and/or with a heavy vehicle load, and once the start situation is identified and traction slip prevails, reducing a brake control intervention and/or increasing the nominal engine torque.

2. Method as claimed in claim 1,
**characterized in that** for the identification one or more of the following steps are performed:
checking whether the actual engine torque is in excess of a first threshold value,
checking whether the running performance of the wheels is synchronous within defined limits,
checking whether the traction slip of at least one wheel or the sum of the traction slips of the driven wheels is below a second threshold value,
checking whether the acceleration of a traction slip and/or a driven wheel or the sum per axle thereof and/or the acceleration of the engine is more negative than a negative third threshold value.

3. Method as claimed in claim 2,
**characterized in that** it is checked for the identification whether the vehicle speed is below a fourth threshold value.

4. Method as claimed in claim 2 or claim 3,
**characterized in that** when checking the actual engine torque, the first threshold value is set to be higher than a torque value required when starting to drive on a level roadway.

5. Method as claimed in any one of claims 2 to 4,
**characterized in that** when checking the running performance of the wheels with respect to synchronous running, the wheel accelerations, and/or the wheel slips, and/or the wheel speeds of the driven wheels are compared, and synchronous running is considered to prevail once a difference is smaller than a respective threshold value.

6. Method as claimed in any one of claims 2 to 5,
**characterized in that** when checking the traction slip, the slip of at least one wheel of the driven axle is checked as to whether it is within a defined range of values within a time window after control commencement.

7. Method as claimed in claim 6,
**characterized in that** the time window lasts 300 to 700 msec, preferably 400 to 600 msec.

8. Method as claimed in any one of the preceding claims,
**characterized in that** following the identification, the brake control intervention is discontinued or prevented, respectively.

9. Method as claimed in any one of the preceding claims,
**characterized in that** the nominal engine torque is increased in accordance with the engine rotational speed and/or in accordance with the engine rotational speed gradient.

10. Method as claimed in claim 9,
**characterized in that** the nominal engine torque is increased by a first amount once the engine rotational speed falls below a fifth threshold value, and is increased by a second, higher amount once the engine rotational speed gradient falls below a negative sixth threshold value.

11. Method as claimed in claim 9 or claim 10,
**characterized in that** the engine torque is PD-controlled, P-controlled or D-controlled, preferably PD-controlled, in accordance with the engine rotational speed.

12. Method as claimed in any one of the preceding claims,
**characterized in that** the method is implemented in addition to a traction slip control method, wherein the traction slip is compared with a threshold, optionally responsive to the vehicle speed, and varied by engine torque reduction and/or brake pressure increase.

13. Device for controlling the traction slip of a vehicle, more particularly, for implementing the method as claimed in any one of the preceding claims, which includes an identification device (22) for identifying an uphill start situation at a high coefficient of friction and/or with a heavy vehicle load, and
an actuating device (24) which reduces a brake control intervention and/or increases the nominal engine torque once the start situation is identified and traction slip prevails.

14. Device as claimed in claim 13,
**characterized in that** the identification device (22) includes a checking device (32) for checking whether the actual engine torque is in excess of a first threshold value, and/or whether the running performance of the wheels within defined limits is synchronous, and/or whether the traction slip of at least one wheel or the sum of the traction slips of the driven wheels is below a second threshold value, and/or whether the acceleration of a traction slip, or a driven wheel, or the sum per axle thereof, or the acceleration of the engine is more negative than a negative third threshold value.

15. Device as claimed in claim 14,
**characterized in that** the checking device (32) checks whether the vehicle speed is below a fourth threshold value.

16. Device as claimed in claim 14 or 15,
**characterized in that** when checking the actual engine torque, a setting device (31) sets the first threshold value higher than a torque value which is required when starting to drive on a level roadway.

17. Device as claimed in any one of claims 14 to 16,
**characterized in that** for checking the running performance of the wheels with respect to synchronous running, a comparison device (33) is provided for comparing the wheel accelerations and/or the wheel slips and/or the wheel speeds of the driven wheels, and synchronous running is considered to prevail once a difference is smaller than a respectively corresponding threshold value.

18. Device as claimed in any one of claims 14 to 17,
**characterized in that** when checking the traction slip, the slip of at least one wheel of the driven axle is checked as to whether it is within a defined range of values within a time window after control commencement.

19. Device as claimed in any one of claims 13 to 18,
**characterized by** an engine interface (43) by which the nominal engine torque is increased in accordance with the engine rotational speed and/or in accordance with the engine rotational speed gradient.

20. Device as claimed in claim 19,
**characterized by** a PD-control, P-control or D-control of the engine torque, preferably a PD-control, in accordance with the engine rotational speed.

## Revendications

1. Procédé de régulation du glissement de traction d'un véhicule, comportant les opérations consistant
à constater une situation de démarrage en présence d'un coefficient de frottement élevé en côte et/ou avec une charge de véhicule importante et,
lorsque la situation de démarrage est constatée et qu'un glissement de traction est présent, à réduire une intervention au frein relevants de la technique de régulation et/ou à augmenter le couple moteur de consigne.

2. Procédé suivant la revendication 1, **caractérisé en ce que**, pour la constatation, une ou plusieurs des opérations suivantes sont exécutées :
surveiller si le couple moteur réel est supérieur à une première valeur de seuil,
surveiller si le comportement de roulement des roues est synchrone dans des limites déterminées,
surveiller si le glissement de traction d'au moins une roue ou la somme des glissements de traction des roues motrices est inférieur à une deuxième valeur de seuil,
surveiller si l'accélération d'un glissement de traction et/ou d'une roue motrice ou de sa somme par essieu et/ou l'accélération du moteur est plus négative qu'une troisième valeur de seuil négative.

3. Procédé suivant la revendication 2, **caractérisé en ce que**, pour la constatation, il est vérifié si la vitesse de véhicule est inférieure à une quatrième valeur de seuil.

4. Procédé suivant la revendication 2 ou 3, **caractérisé en ce que**, lors de la surveillance du couple moteur réel, la première valeur de seuil est fixée plus haut qu'une valeur de couple qui est nécessaires lors du démarrage en plat.

5. Procédé suivant l'une des revendications 2 à 4, **caractérisé en ce que**, lors de la surveillance du comportement de roulement des roues en ce qui concerne un roulement synchrone, les accélérations de roue et/ou les glissements de roue et/ou les vitesses de roue des roues motrices sont comparés, un roulement synchrone étant constaté lorsqu'un écart est plus petit qu'une valeur de seuil chaque fois correspondante.

6. Procédé suivant l'une des revendications 2 à 5, **caractérisé en ce que**, lors de la surveillance du glissement de traction, le glissement d'au moins une roue de l'essieu moteur est surveillé en ce qui concerne la question de savoir si, dans une fenêtre de temps suivant l'entrée en service d'une régulation, il est situé dans une bande de valeurs déterminée.

7. Procédé suivant la revendication 6, **caractérisé en ce que** la fenêtre de temps dure 300 à 700 ms, de préférence 400 à 600 ms.

8. Procédé suivant l'une des revendications précédentes, **caractérisé en ce qu'**à la suite de la constatation, l'intervention au frein relevant de la technique de régulation est interrompue ou empêchée.

9. Procédé suivant l'une des revendications précédentes, **caractérisé en ce que** le couple moteur de consigne est augmenté en fonction de la vitesse de rotation du moteur et/ou en fonction du gradient de vitesse de rotation du moteur.

10. Procédé suivant la revendication 9, **caractérisé en ce que** le couple moteur de consigne est augmenté d'une première valeur lorsque la vitesse de rotation du moteur franchit vers le bas une cinquième valeur de seuil et est augmenté d'une seconde valeur, plus élevée, lorsque le gradient de vitesse de rotation du moteur franchit vers le bas une sixième valeur de seuil négative.

11. Procédé suivant la revendication 9 ou 10, **caractérisé en ce que** le couple moteur fait l'objet, en fonction de la vitesse de rotation du moteur, d'une régulation P et D, d'une régulation P ou d'une régulation D, de préférence d'une régulation P et D.

12. Procédé suivant l'une des revendications précédentes, **caractérisé en ce qu'**il est exécuté en complément à un procédé de régulation de glissement de traction selon lequel le glissement de traction est comparé à un seuil, dépendant éventuellement de la vitesse du véhicule, et est modifié au moyen d'un abaissement du couple moteur et/ou d'une augmentation de pression de frein.

13. Dispositif de régulation du glissement de traction d'un véhicule, notamment pour la mise en oeuvre du procédé suivant l'une des revendications précédentes, comprenant
un dispositif de constatation (22) servant à constater une situation de démarrage en présence d'un coefficient de frottement élevé en côte et/ou avec une charge de véhicule élevée, et
un dispositif de commande (24) qui, lorsque la situation de démarrage est constatée et qu'un glissement de traction est présent, réduit une intervention au frein relevant de la technique de régulation et/ou accroît le couple moteur de consigne.

14. Dispositif suivant la revendication 13, **caractérisé en ce que** le dispositif de constatation (22) comprend des moyens de surveillance (32) servant à surveiller si le couple moteur réel est supérieur à une première valeur de seuil et/ou si le comportement de roulement des roues est synchrone dans des limites déterminées, et/ou si le glissement de traction d'au moins une roue ou la somme des glissements de traction des roues motrices est inférieur à une deuxième valeur de seuil, et/ou si l'accélération d'un glissement de traction ou d'une roue motrice ou sa somme par essieu ou l'accélération du moteur est plus négative qu'une troisième valeur de seuil négative.

15. Dispositif suivant la revendication 14, **caractérisé en ce que** les moyens de surveillance (32) vérifient si la vitesse de véhicule est inférieure à une quatrième valeur de seuil.

16. Dispositif suivant la revendication 14 ou 15, **caractérisé en ce que**, lors de la surveillance du couple moteur réel, un dispositif de fixation (31) fixe la première valeur de seuil à une valeur plus élevée qu'une valeur de couple qui est nécessaire lors du démarrage en plat.

17. Dispositif suivant l'une des revendications 14 à 16, **caractérisé en ce que**, pour la surveillance du comportement de roulement des roues en ce qui concerne un roulement synchrone, il est prévu un dispositif de comparaison (33) pour les accélérations de roue et/ou les glissements de roue et/ou les vitesses de roue des roues motrices, un roulement synchrone étant constaté lorsqu'un écart est inférieur à une valeur de seuil correspondante chaque fois considérée.

18. Dispositif suivant l'une des revendications 14 à 17, **caractérisé en ce que**, lors de la surveillance du glissement de traction, le glissement d'au moins une roue de l'essieu moteur est surveillé en ce qui concerne la question de savoir si, dans une fenêtre de temps suivant l'entrée en service d'une régulation, il est situé dans une bande de valeurs déterminée.

19. Dispositif suivant l'une des revendications 13 à 18, **caractérisé par** une interface de moteur (43) au moyen de laquelle le couple moteur de consigne est augmenté en fonction de la vitesse de rotation du moteur et/ou en fonction du gradient de vitesse de rotation du moteur.

20. Dispositif suivant la revendication 19, **caractérisé par** une régulation P et D, une régulation P ou une régulation D du couple moteur, de préférence une régulation P et D, en fonction de la vitesse de rotation du moteur.
